# EUROPEAN PATENT SPECIFICATION

(11) **EP 4 244 030 B1**
(45) Date of publication and mention of the grant of the patent: **11.09.2024**
(21) Application number: 21811509.5
(22) Date of filing: 15.11.2021
(51) Int. Cl.: B29B 7/12, B29B 7/40, B29B 7/82, B01J 19/18, B01J 19/00, C08G 69/28

(54) **APPARATUS COMPRISING INDUCTION HEATING ELEMENTS FOR PREPARING A POLYAMIDE POLYMER**
VORRICHTUNG MIT INDUKTIONSHEIZELEMENTEN ZUR HERSTELLUNG EINES POLYAMIDPOLYMERS
APPAREIL COMPRENANT DES ÉLÉMENTS DE CHAUFFAGE PAR INDUCTION POUR LA PRÉPARATION D'UN POLYMÈRE DE POLYAMIDE

(30) Priority: 16.11.2020 US 202063114220 P
(43) Date of publication of application: 20.09.2023
(73) Proprietor: INVISTA Textiles (U.K.) Limited, London EC2V 7AF (GB)
(72) Inventor: GLERUM, Salomon Cornelius, London Middlesex EC2V 7JE (GB); KAUSHIVA, Bryan D., London Middlesex EC2V 7JE (GB); KNULST, Jarmo, London Middlesex EC2V 7JE (GB)
(74) Representative: Carpmaels & Ransford LLP
(86) International application number: PCT/IB2021/060570
(87) International publication number: WO 2022/101881

(56) References cited:
- CN-A- 103 612 342
- US-A- 3 900 450
- US-A- 5 674 974
- US-A1- 2003 175 196
- US-A1- 2015 121 954
- US-A1- 2020 330 944
- US-B1- 6 315 972

## Description

### FIELD OF THE INVENTION

The disclosure relates to production of polyamides. The disclosure also relates to deployment of induction heating within the steps and processes of polyamide production.

### BACKGROUND

Polyamides are versatile polymers that are readily processed into fibers, pellets, and films, and are useful across virtually all industries. Industrially important polyamides include those prepared from condensation of a diacid and a diamine, such as Nylon-6,6, and those prepared from lactams, such as Nylon-6. Industrial scale production of polyamide involves large transfers of heat, which can limit productivity of a production system.

Heat transfer fluids, which can be vapor and liquid, are one approach to transferring heat to a vessel. However, heat transfer fluids can present various problems. For example, the fluids can involve large piping systems, sized to allow good flow and heat distribution, that take up valuable space within the vessel, thereby lower productivity of the vessel itself. The heat transfer fluids can lose temperature as they flow through the distribution system, which lowers rates of heat transfer. Vapor heat transfer systems, at times of peak heat flux, can evolve condensate that overwhelms the piping system and reduces effective heat transfer area. Heat transfer fluids can also involve high temperature fluids that can be hazardous. Furthermore, managing such heat transfer fluids and systems may require frequent inspections, shutdowns, and eventually high operating and maintenance costs. Vapor systems pose particular hazards with respect to the need for containment to avoid explosive conditions. The chemicals themselves and their degradation products can present environmental concern. Heat transfer fluids can be expensive, and their industrial scale use can require large quantities and costly distribution systems. These elements can comprise a significant part of the costs of construction and operation of nylon production facilities.

Electrical heaters can also be used for chemical processing; however, electric heaters have had the general problem of poor control of surface temperatures and resultingly poor compatibility with sensitive reaction mixtures or viscous materials. Achieving high productivity with such heaters is limited by the difficulties of maintaining thermal uniformity and consistency. Polymer degradation can be observed in areas of vessels where temperatures deviate by a surprisingly small amount above the desired set point. Thus, although electric heaters can avoid elaborate piping systems that take up valuable vessel space, electric heaters are not desired on the industrial scale for reaction mixtures involving viscous liquids or sensitive mixtures. One type of heating method, induction heating, allows use of an electrical energy source to heat a susceptor via electromagnetic radiation, thus permitting development of new heating systems. However, induction heating has not been effective in all applications. There are relatively few applications where induction heating has been successful for large scale chemical processing. Most examples are limited to gas-phase processes and microreactors, which do not address the challenges of large scale liquid-phase reactions.

Interpower Induction commercially offers an induction heating system for the exterior of large chemical reactors. These systems impose the electromagnetic field on the exterior of the vessel, which is itself an inductive heating element. As the vessel wall is heated, it conducts heat from the vessel wall into the reactor contents. Overall heat flux remains limited by the rate of conductive heat transfer from the reactor wall to the reactor contents.

Preparation of polyamides can involve sensitive and viscous reaction materials. There is a need for methods, vessels, and systems for producing polyamides with higher efficiency, lower energy costs, and reduced environmental impact.
In US5674974A, there is described a continuous process for the preparation of polyamides, equipment in which the polymerization process can be conducted, and process control methods for said polymerization process.

### SUMMARY OF THE INVENTION

Present invention is defined by the subject-matter of independent claim 1; preferred embodiments are claimed in the dependent claims.

The present disclosure therefore provides an apparatus for preparing a polyamide polymer. The apparatus includes at least one addition inlet for adding liquid polyamide precursors; a vessel comprising one or more chamber containing a plurality of induction heating elements; at least one outlet for removing water vapor; and at least one outlet for removing the polyamide polymer. The apparatus can include an agitator, a recirculator, or both, configured to circulate reaction components through the one or more chamber of the vessel. The induction heating elements each comprise a susceptor and an induction coil optionally connected to a power source. The heating elements are positioned in an array that provides a channel between two or more of the heating elements circumferential about an axis of the chamber. The heating elements also provide an axial channel between two or more of the heating elements.

Advantages, some of which are unexpected, are achieved by various aspects of the present disclosure. For example, the present disclosure provides a chemical vessel having internal induction heating elements that provide higher productivity and faster, more efficient heating of a liquid reaction mixture. Polyamide production can involve both low viscosity and high viscosity components, which change over time resulting in a viscosity of the reaction mixture that increases by orders of magnitude over the course of reaction. Moreover, polyamide production can involve a mixture of liquid organic and aqueous phases, vapor phases, salt precursors, and organic products and byproducts. Additionally, the polymer products can suffer from degradation if vessel temperatures deviate from a desired temperature set point. The presence of heating elements internal to the vessel can negatively influence mixing, material flow, heat distribution, and product removal in complex ways. For example, poor mixing, material flow, or heat distribution can lead to reduced product yields, polymer degradation, and longer processing time. As another example, internal heating elements can hamper product removal. Moreover, heating rate of a heating element is itself not necessarily predictive of overall process productivity. For example, surface heat, heating rate, or electrical efficiency of a given heating element do not necessarily impart productivity gains due to the interplay of material flow, heat distribution, and product retention. Due to these various factors, the effect of various internal elements on such complex mixtures is not readily predictable. In various aspects, the present disclosure surprisingly and advantageously provides a vessel having internal heating elements oriented in a manner that achieves improved productivity without suffering from productivity problems associated with poor mixing, poor heat distribution, or product retention.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, various aspects discussed in the present document.

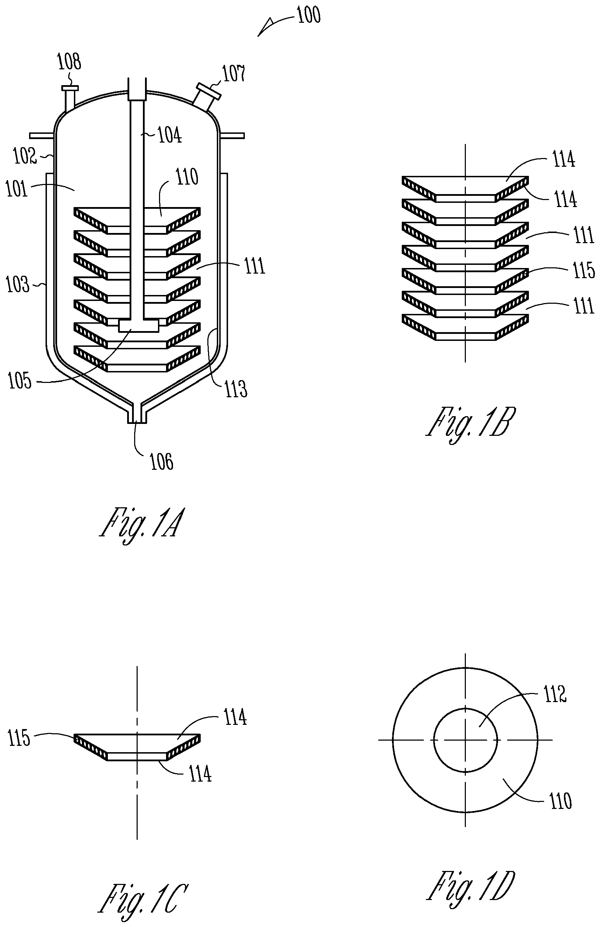

FIG. 1A-D illustrate an arrangement of induction heating elements useful in a chemical vessel for preparing polyamides. FIG. 1A shows a chemical vessel in which the plate-type induction heating elements are located within the chamber and arranged in a stack array. FIG. 1B shows a cross-sectional view of the array, in which the plates each represent a conical frustum, angled so that the open center of the frustum is lower and the outer edge of the frustum is higher, and the plates spaced to provide radial and circumferential flow channels. FIG. 1C shows a cross-sectional view of a single induction heating element, which has a plurality of electrically conductive tubes welded or sealed within metal plates that are the susceptors. The tubes are electrically insulated from the susceptor plates. The tubes are spaced apart and can be insulated from each other. Under suitable process conditions and system load demands, insulated cables can be used instead of tubing. The tubing or cables provide the induction coil. FIG. 1D shows a top view of the array, in which the center provides an axial channel. An agitator can optionally be included in the vessel by utilizing the axial channel or arranging it in the spaces between or around the plate array.

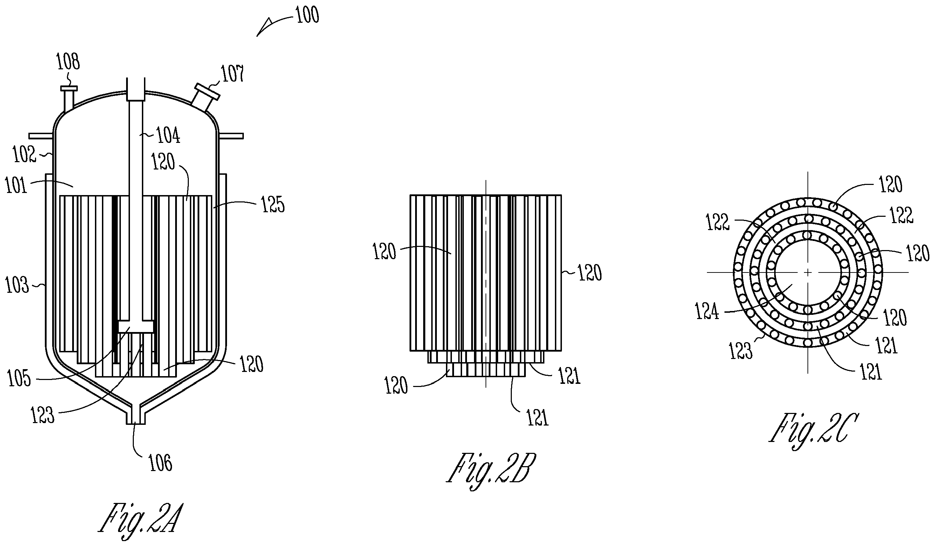

FIG. 2A-C illustrate an arrangement of induction heating elements useful in a chemical vessel for preparing polyamides. FIG. 2A illustrates a chemical vessel having internal, rod-type induction heating elements, which are distributed across circular mounts and arranged in concentric circles. FIG. 2B shows a front view of the array, in which the rods are spaced to provide flow channels. FIG. 2C provides a cross-sectional top view showing a plurality of tubes welded to a support ring, the tubes containing insulated induction coils. The coils can be formed via a helical wind within each tube. The induction coils can be either conductive tubing or cables. An axial channel is present in the center of the array between the rods of the innermost ring, additional axial and circumferential channels are present between concentric supports rings, and radial flow channels are present between the rods. An agitator can optionally be included in the vessel by utilizing any of the appropriately dimensioned spaces between or around the heating elements.

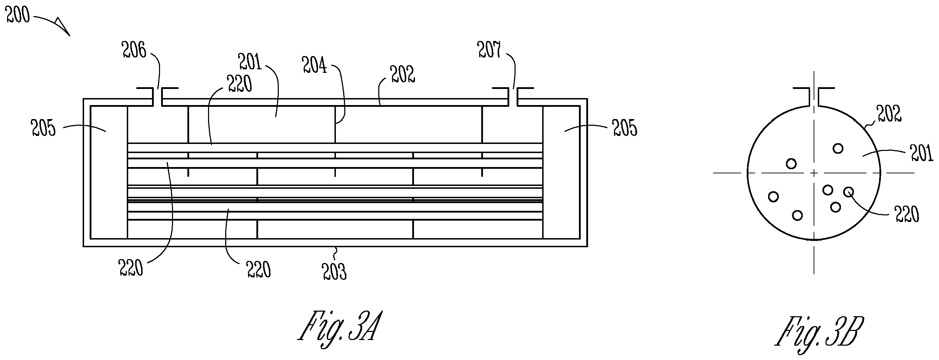

FIG. 3A-B illustrate an arrangement of induction heating elements useful in a heat exchanger for preparing polyamides. FIG. 3A shows a cross-sectional side view of a horizontal heat exchanger, containing an array of rod-type induction heating elements arranged in the direction of flow. FIG. 3B shows a cross-sectional end view showing tube placement. The heating elements are axially oriented in the direction of flow but not necessarily arranged in a symmetric pattern and provide channels that are not necessarily entered on the axis of the vessel. The induction coils of the heating elements can be formed from helical windings of electrically conductive tubes or cables within the heating element tubes, or the induction coil can be external to the heat exchanger shell, or both.

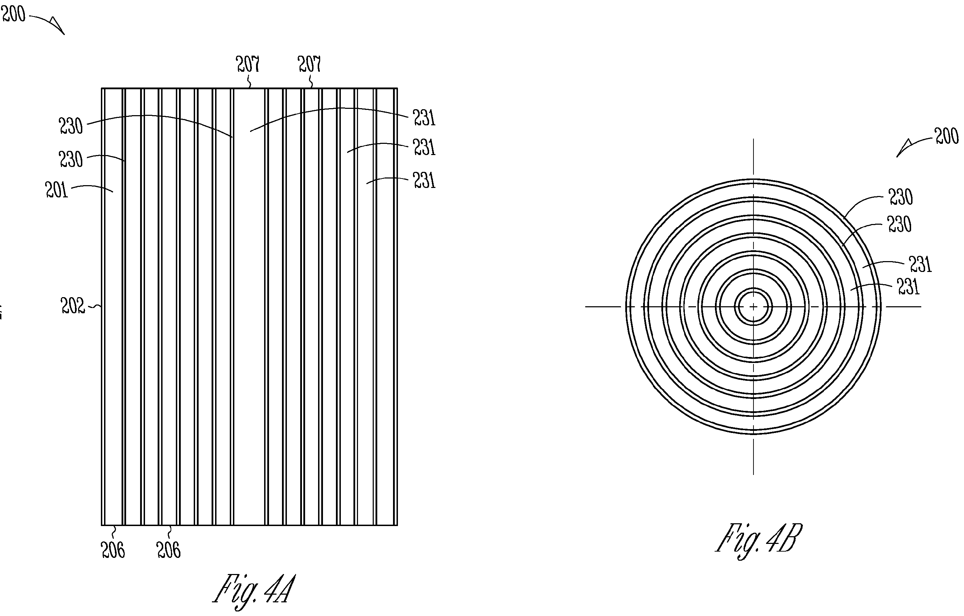

FIG. 4A-B illustrate an arrangement of induction heating elements useful in a heat exchanger for preparing polyamides. The heat exchanger having internal, cylinder-type induction heating elements, which are arranged concentrically. FIG. 4A shows a cross-sectional side view of the heat exchanger, containing an array of heating elements in the form of concentric open cylinders. FIG. 4B shows a cross-sectional top view of the heat exchanger, showing that the vessel contains concentric cylinders, which each serve as a heating element, and which provide axial, circumferential channels between the cylinder walls through which a liquid medium can flow. Each cylindrical shell can contain windings of electrically conductive tubing or cables that form the induction coil for that shell.

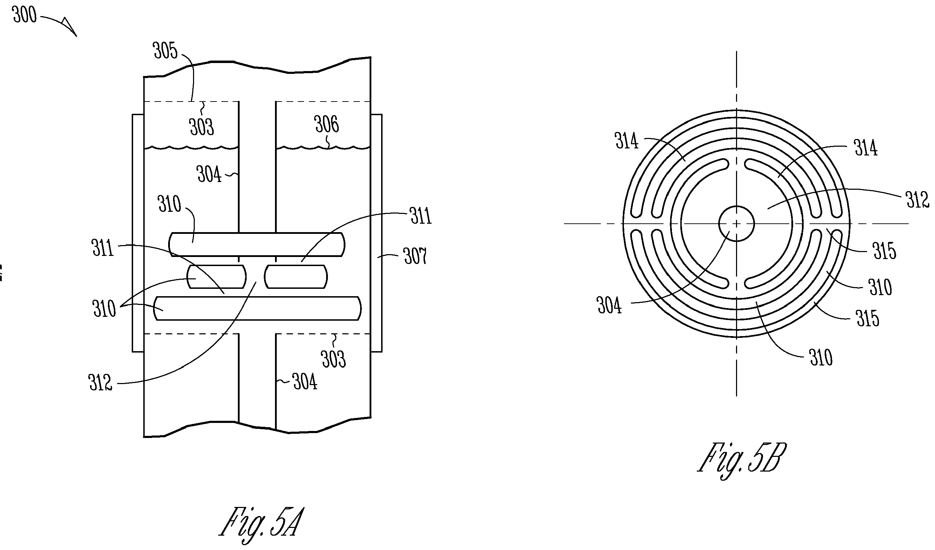

FIG. 5A-B illustrate an arrangement of induction heating elements useful in a vessel stage for preparing polyamides. FIG. 5A shows a cross-sectional view of a stage having a tray, a downcomer, and an array of induction heating elements. FIG. 5B shows a cross-sectional top view of the stage, showing the downcomer in the center and heating elements arranged in a butterfly arrangement. Each element can have an external shell that is the susceptor formed to seal the process liquid from the internal induction coil. The induction coil can be made from one or more windings of an electrically conductive tube or insulated cable.

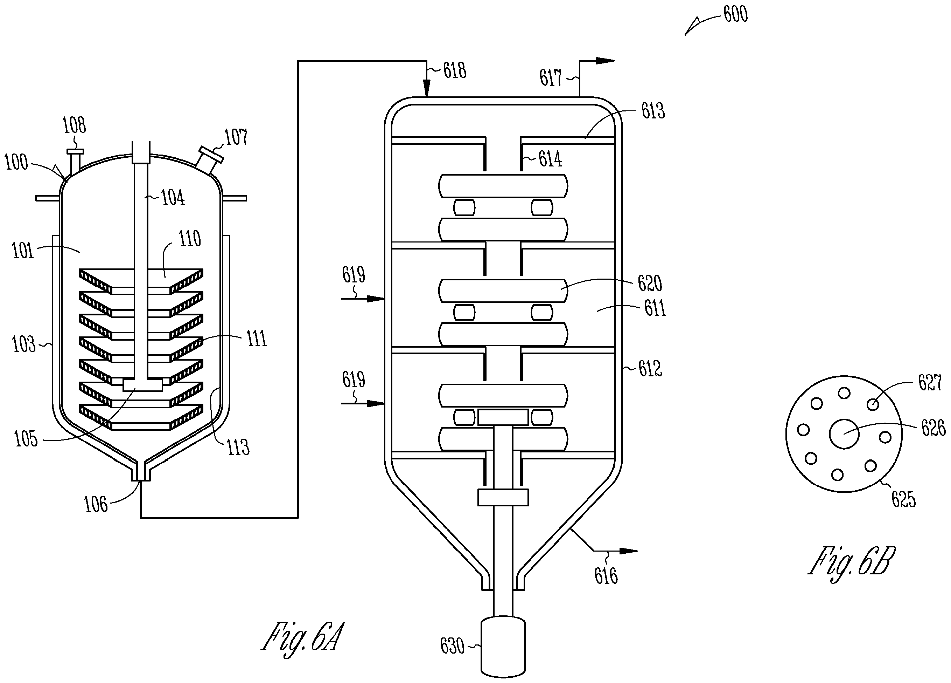

FIG. 6A-6B illustrate use of an internal induction heating array in a precursor mixing vessel and a distillation-polymerization tower. FIG. 6A shows a vessel system. FIG. 6B shows a top view of a stage tray and downcomer.

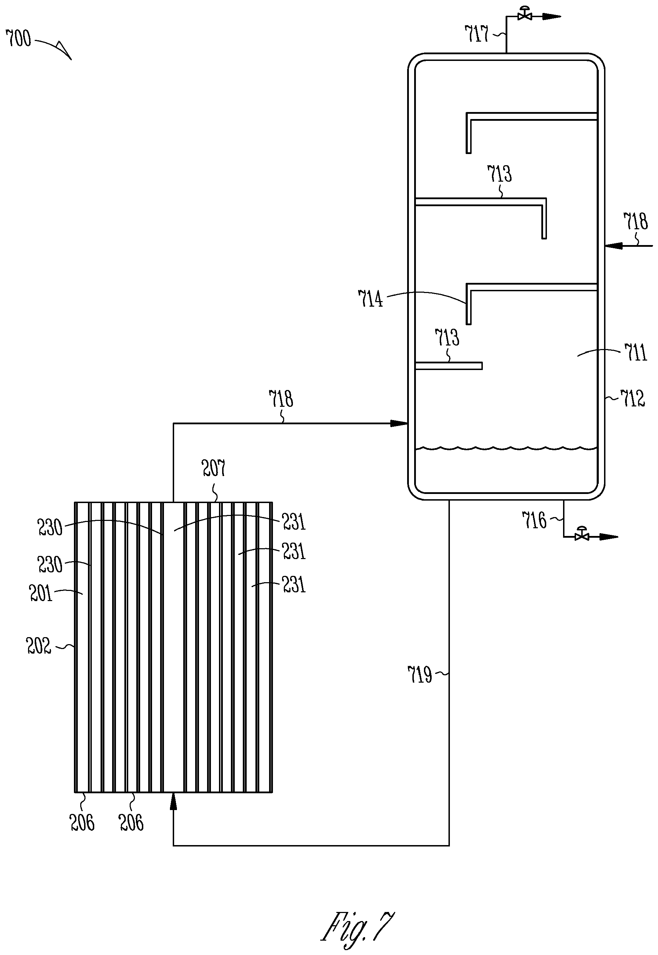

FIG. 7 illustrates use of an internal induction heating array in the heat exchanger of a calandria recirculator.

### DETAILED DESCRIPTION

Reference will now be made in detail to certain aspects of the disclosed subject matter. The invention is defined by the independent claim. Embodiments of the invention are defined by the dependent claims.

The present disclosure describes, among other things, vessels, heat exchangers, methods, and systems that are useful for preparing polyamides. Polyamide production can require the input of large amounts of heat and production rates can be limited by the attainable maximum heat flux of the system. However, polyamide production can involve mixtures of both lowviscosity and high-viscosity, and both liquid, gas, and solid phase elements. For example, some process vessels for nylon production such as batch reactors pose challenges due to features of the polymerization. The feed to the vessel can contain low molecular weight reactants that comprise the precursor salts, other additives or co-reactants and generally a large fraction of water. As a result, the viscosity of the solution is low. The low viscosity of the solution can make it easy to pump through the system than the product, which can be a higher viscosity solution. Higher rates of heat transfer can be attained by increasing the surface area of heaters. As the reaction proceeds, however, the viscosity increases by orders of magnitude to the point that removing product can become problematic from high surface area heaters. Surfaces are therefore be designed to drain well to avoid build-up of material and degradation. Additionally, during polyamide condensation water vapor is evolved, which can be removed from the reaction environment to drive the reaction forward, and other vapor phase components can be present as well, such as those imparted by precursor degradation.

In another example, nylon salts are converted to nylon polymers in either batch reactors or multi-stage continuous processes. In these cases, productivity is partly defined by the heat transfer rate to the bulk mixture. Generally, the rate of convective heat transfer into the bulk fluid is slower than the rate of conductive heat transfer through metal vessel walls. Heat transfer to the vessel contents can be the limiting factor for overall productivity, but increased heat transfer inside of the vessel cannot be at the expense of worsened mixing or convective heat transfer in the bulk fluid, or at the expense of problematic product retention.

Further, producing polyamide on a large scale presents additional challenges. Many polyamides require processing temperatures at or above 250°C, which when combined with high pressures and industrial scale, precludes the use of polymeric materials for vessel body construction. Additionally, at scale, heating media closer to vessel walls provides a shielding effect for the internal material. The presently described vessel, heat-exchangers, methods, and systems, can be useful for large scale, industrial production of polyamides. For example, various aspects can involve a vessel or chamber having a diameter of at least or about 1, 2, 3, 4, 5, 6, 7, 8, 9, or 10 meters. For example, various aspects can involve production of polyamides in batches of at least or about 1, 100, 1000, 2000, 3000, 4000, or at least or about 5000 kg. By applying the design principles described herein, with suitable arrangements of heating elements a broad range of vessel proportions or batch sizes can be accommodated. In various aspects herein, the present disclosure describes use of various arrays of induction heating elements that provide improved heat transfer, suitable large and industrial scale production of polyamide polymer processes, and without deleterious effects on convective heat transfer, mixing, and product retention, so to provide improved overall productivity. In various examples, the vessel can have a total heat transfer area of about 1 m² to about 500 m², about 5 m² to about 100 m², about 5 m² to about 50 m², about 5 m² to about 30 m², about 10 m² to about 500 m², about 10 m² to about 100 m², about 10 m² to about 50 m², or about 10 m² to about 30 m². The ratio of heat transfer area to liquid volume can be about 0.5 m^{2/}m³ to about 100 m^{2/}m³, about 1 m^{2/}m³ to about 100 m^{2/}m³, about 1 m^{2/}m³ to about 50 m^{2/}m³, about 1 m^{2/}m³ to about 25 m^{2/}m³, about 5 m^{2/}m³ to about 100 m^{2/}m³, about 5 m^{2/}m³ to about 50 m^{2/}m³, about 5 m^{2/}m³ to about 30 m^{2/}m³, about 10 m^{2/}m³ to about 100 m^{2/}m³, about 10 m^{2/}m³ to about 50 m^{2/}m³, or about 10 m^{2/}m³ to about 30 m^{2/}m³.

The present disclosure provides a chemical vessel using internal induction heating useful for preparation of polyamide on a large scale. The vessel can contain an array of a plurality of induction heating elements within a chamber of the vessel. The induction heating elements contain a susceptor and an induction heating coil. As used herein, a "plurality" means two or more. For example, a plurality can include at least or about 2, 3, 4, 5, 6, 7, 8, 9, 10, 15, 20, 25, 27, 30, 35, 40, 45, or at least or about 50. In other examples, a plurality can include about 5 to about 15, about 5 to about 50, about 10 to about 30, about 20 to about 40, or about 2 to about 10.

The shape of the heating element typically corresponds to the shape of the susceptor, which can be relatively flat such as a curved plate or fin, or it can be a long aspect ratio shape such as a rod or tubing. The susceptor can be rod-shaped, plate-shaped, cylinder-shaped, or variants thereof. For example, a plate-shaped susceptor might be a substantially flat circle, a curved plate, a frustum shape, or a bowl shape. The susceptor can have a smooth external surface or optionally include ridges or fins to increase the interfacial area of the side in contact with the process fluid. The susceptor can be solid or can contain an inner chamber, such as a hollow or internal piping. For example, the susceptor can be a hollow cylindrical rod, a hollow rectangular rod, a hollow shell of a cylinder, a hollow shell of a frustum. For example, the susceptor can be a rod, a plate, a cylinder, a prism, a cuboid, a fin, a frustum, a cone, or curved variants and fragments thereof. The susceptors can be constructed of any suitable material. For example, the susceptors can be constructed from a stainless steel alloy, or a steel inner layer with external stainless steel cladding, or other appropriate metallurgy as appropriate for the specific duty. Stainless steel construction can be sufficient for the temperature ranges required for various polyamide processing. Utilizing a core inner layer or pipe of a magnetic alloy can improve the overall efficiency of the heater at steady-state. For example, a dual layer susceptor can be fabricated by bonding an inner layer of magnetic steel to an outer layer that is corrosion resistant such as from stainless steel or other metallurgy. The thicknesses of each layer can be specified separately to optimize the overall rate of heating. In various aspects, the heating element is metal tubing that is bent and curved into the desired shape, which can be a high surface area shape or a butterfly arrangement that permits induction coils to be threaded through the tubing and the resulting supply and return connections to be located together.

The induction heating coil includes an electric cable connected to a power source. In various aspects, the induction heating coil can further include one or more of shielding, insulating layers, and channels for liquid cooling. The internal induction coils can be constructed from any appropriate conductive material. For example, the induction coils can be copper wiring. The wiring can be multi-twist wiring, which in various aspects can improve heating efficiency. Where tubing is utilized such as for long aspect ratio heating elements, copper tubing can be sufficient but other conductive materials can also be utilized. At the various lower temperatures that can be involved in polyamide processing, water cooling is not required, but for various high energy flux usages water cooling can improve overall efficiency and performance. In various examples, having tubing of sufficient diameter for improved water flow is advantageous. In various further aspects, square tubing is found to provide better overall temperature uniformity and efficiency than round tubing. Various examples temperature uniformity, system efficiency and overall performance can be improved by incorporating a magnetic flux concentrator such as FLUXTROL 50 from Fluxtrol Inc. (Auburn Hills, MI).

As illustrated in the figures, there is an interplay between the shape and size of the susceptor, the vessel proportions, and fluid dynamics of the process unit that influences heat transfer to the process fluid, but these factors can also influence efficiency of the induction coil heating. The induction coils that heat the susceptors can take on many suitable shapes and forms to achieve efficient heating of the susceptor while increasing overall interfacial surface area with the process fluid. Induction heating coils can be single-turn or multipleturn. The coils can be left turn, right turn, or alternating such as across an assembly. The coils can take on forms such as rods or ear-shapes, and can be hair-pins or parallel arrangements. The shape of the susceptor and the forms of the induction coils can include any one or more of these forms and in any combination so as to accommodate the demands of the process unit operation and achieve the overall desired process characteristics and good heat transfer. For example, the induction heating coil can form a helix. Some helical induction coils can, for example, correspond to commercially available helical coils such as are provided by "Complete Guide to Induction Coil Design" by Ambrell® Induction Heating Solutions, for which an electronic copy is available on the world wide web at sg-induction.com/wp-content/uploads/2021/03/Coil-Design-Induttore.pdf. Suitable helical shapes can be modified, for example, with straight sections or other modifications as suitable to tailor the heat transfer and flow characteristics of the susceptor in the specific reactor. For example, an induction coil can accommodate a susceptor that includes extended surface area such as fins.

Maintaining a good operable temperature of the induction coil can be accomplished by transferring heat to the surrounding process fluid via the susceptor, or alternatively the coil can be fabricated of tubing to enable the use of internal cooling fluids. As a further example, a helical induction heating coil can comprise one or more helical turns wound with spaces in between the turns for fluid to cross-flow across the coil geometry or tightly wound turns that can form a wall with no spaces in between. Another variation is feasible with a combination of the two arranged in alternating sections depending on the flow regimes in a vessel.

The electrical components of the coil can be desirably maintained at as low a temperature as convenient. For example, a steel alloy susceptor can suitably operate at temperatures exceeding 300 °C, while the induction coil can be maintained at 20-30 °C. Use of a thermal break, or insulation, can reduce or minimize the impact of conductive heat flow through its thermal body and overheating the components. Such insulation can be based on ceramic or glass or mineral fibers including alumino-silicate fiber or mullite polycrystalline fiber or non-fibrous materials such as calcium silicate. For example, Microtherm^{®} panels from Promat, which are rigid microporous insulation boards, can be fabricated to fit custom shapes in suitably thin profiles that enable sandwiching around the tubing. Other forms and examples of thermal breaking can be suitably utilized, and those skilled in the art can ascertain additional such insulating materials and techniques.

Induction can be effected, for example, by subjecting the susceptor to an alternating field provided by the induction coil at a frequency in the range of about 50 Hz to about 30 MHz. The frequency and susceptor can be selected to provide the target temperature demanded, e.g., for precursor dissolution, or polyamide condensation polymerization. The present disclosure is not intended to be limited to any particular induction frequency or pulse pattern. For example, the frequency can be about 50 Hz to about 5 kHz, 50 Hz to about 50 kHz, 50 Hz to about 100 kHz, about 1 kHz to about 80 kHz, about 1 kHz to about 60 kHz, about 1 kHz to about 50 kHz, about 1 kHz to about 40 kHz, about 1 kHz to about 30 kHz, about 10 kHz to about 100 kHz, about 10 kHz to about 80 kHz, about 100 kHz to about 1 MHz, about 100 kHz to about 500 kHz, about 500 kHz to about 30 MHz, about 1 MHz to about 30 MHz, about 50 Hz to about 30 MHz, about 50 Hz to about 300 kHz, or about 50 Hz to about 3 kHz. Suitable frequencies can be ascertained by a skilled artisan. Appropriate induction coil frequencies can be ascertained by a skilled artisan.

In various aspects, the target reaction temperature can be about 50°C to about 500°C, about 50°C to about 400°C, about 50°C to about 380°C, about 50°C to about 360°C, about 50°C to about 350°C, about 50°C to about 340°C, about 50°C to about 320°C, about 50°C to about 300°C, about 50°C to about 280°C, about 50°C to about 260°C, about 50°C to about 250°C; about 100°C to about 500°C, about 100°C to about 400°C, about 100°C to about 380°C, about 100°C to about 360°C, about 100°C to about 350°C, about 100°C to about 340°C, about 100°C to about 320°C, about 100°C to about 300°C, about 100°C to about 280°C, about 100°C to about 260°C, about 100°C to about 250°C; about 150°C to about 500°C, about 150°C to about 400°C, about 150°C to about 380°C, about 150°C to about 360°C, about 150°C to about 350°C, about 150°C to about 340°C, about 150°C to about 320°C, or about 150°C to about 300°C, about 150°C to about 280°C, about 150°C to about 260°C, about 150°C to about 250°C. For example, some polyamides require processing at temperatures at or above 250°C, and the target reaction temperature can be at or above 250°C.

The induction heating coil can be located within the susceptor. For example, the induction heating coil can be placed within a hollow in the susceptor, or the susceptor can be formed around the induction heating coil. For example, the two pieces of metal can be welded together forming a layered structure including the induction coil and related components to provide a desired susceptor shape having a sealed internal space containing the induction heating coil. In another example, the metal can be cast or molded around the induction heating coil.

The induction heating elements can be fabricated in any suitable manner. For example, the induction coil can be made with insulated cable or insulated multistrand cable. It can be made with tubing appropriately sized to permit the flow of sufficient cooling water to avoid over heating of the coil. Insulating layers between the coil and the heated surface can be included. Shielding can also be included to improve overall heater efficiency. The heating element can also include magnetic flux concentrators to improve efficiency and to provide more uniform heat distribution in the heated part. These elements can be connected to a power source designed to deliver the required power and frequency using well known methodology.

In various aspects, the induction heating elements are axially oriented parallel with the axis of the vessel.

In various aspects, the induction heating elements are rod-shaped and extend lengthwise at least a portion, a majority, or substantially the entire vertical working length of the chamber. In various aspects, the induction heating elements are plate-shaped and extend at least a portion, a majority, or substantially the entire radial working width of the chamber. In various aspects, the induction heating elements are circular and are stacked axially at least a portion, a majority, or substantially the entire working vertical length of the chamber. In various aspects, the induction heating elements are circular and concentrically placed in an array extending at least a portion, a majority, or substantially the entire working vertical length of the chamber. For example, for a 1 meter diameter chamber, the heating elements can be the shape of a frustum of a cone, having an outer diameter that is at least or about 0.5, 0.6, 0.7, 0.8, 0.9, 0.95, 0.96, 0.97, 0.98, or about or at least 0.99 meters wide. In various further examples, the heating elements can be the shape of a frustum of a cone, having an opening at the inner diameter, which can be at or about 0.01, 0.02, 0.03, 0.04, 0.05, 0.06, 0.07, 0.08, 0.09, 0.1, 0.2, 0.3, 0.4, or about or at least 0.05 meters wide. The inner diameter can provide one or more spaces for connection cables, or can provide a working space that permits axial flow. In various examples, the vessel does not have an agitator. In various other examples, an agitator can optionally be included, such as in the inner diameter space, in the space between plates and the exterior vessel wall, or in spaces created between plates. The agitator can be optional. Such agitator can be mechanical.

In various aspects, the induction heating elements are arranged in an array to provide channels between heating elements sized so that reaction media can flow through. For example, the channels can provide a distance between adjacent heating elements of about 1 cm to about 300 cm, about 1 cm to about 100 cm, about 1 cm to about 50 cm, about 1 cm to about 25 cm, about 1 cm to about 20 cm, 5 cm to about 300 cm, about 5 cm to about 100 cm, about 5 cm to about 50 cm, about 5 cm to about 25 cm, about 5 cm to about 20 cm, 10 cm to about 300 cm, about 10 cm to about 100 cm, about 10 cm to about 50 cm, about 10 cm to about 25 cm, about 10 cm to about 20 cm, 20 cm to about 300 cm, about 20 cm to about 100 cm, or about 20 cm to about 50 cm. For example, the channels can be at least or about 1, 2, 3,4, 5, 6, 7, 8, 9, 10, 15, or 20 cm.

For example, the array of heating elements can provide one or more channel between two or more of the heating elements circumferential about an axis of the chamber. The heating elements can provide one or more axial channel between two or more of the heating elements. For example, the array can provide at least or about 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 40, 50, or 100 channels, which can be axial, radial, circumferential, or a combination thereof. The array of heating elements can contain a stack of two or more heating elements, axially distributed to provide circumferential and radial channels between adjacent heating elements in the stack. A circumferential, radial channel can be planar or helical. The array of heating elements can contain heating elements, radially distributed into concentric rings to provide one or more circumferential and axial channels between adjacent concentric rings. The heating elements can be circumferentially distributed to provide one or more radial channels between adjacent heating elements. Some examples can have a single heating element, which is shaped so as to provide one or more channels pass between and through the heating element. The vessel, or chamber, can have a vertical axis, or an axis corresponding to the predominant direction of flow in the vessel or chamber. For example, flow in the vessel or chamber can be predominantly vertical, or horizontal. The flow can be through the vessel, such as in the case of a continuous or semi-continuous operation, or a recirculating flow as in the case of a batch operation whether the flow is mechanically driven, or the flow can derive from boiling action. As used herein, a "circumferential" space refers to a space encircling a referenced axis. In various examples, circumferential can be fully circumferential, or partially circumferential.

In various aspects, the induction heating elements are positioned in the array parallel, or at a non-perpendicular angle, to the vertical axis or the axis of predominant product flow. For example, in a batch reactor vessel the heating elements are angled at a pitch sufficient to permit downward flow of product, or in a continuous reactor vessel, the heating elements are angled at a pitch sufficient to permit flow of product in the direction of product removal. For example, the induction heating elements can be in the form of plates that are oriented to have a major axis parallel to the axis of the chamber, or are at an angle other than perpendicular to the axis of the chamber. The heating elements can be in the shape of conical frustums having an open inside diameter and have a slant angle of between about 1° and about 80°. For example, the slant angle can be at least or about 1°, 2°, 3°, 4°, 5°, 6°, 7°, 8°, 9°, 10°, 11°, 12°, 13°, 14°, 15°, 16°, 17°, 18°, 19°, 20°, 30°, 40°, 45°, 50°, 60°, 70°, or at least or about 80°. The heating elements can be shaped or oriented so as not to provide a major surface perpendicular to the axis. In various examples, the heating elements can have a major surface oriented parallel to the axis of the vessel, or at an angle to the axis other than 90°C.

The vessel can be a batch reactor vessel, a continuous reactor vessel, or a semi-continuous reactor vessel. For example, the vessel can be an autoclave. The vessel can include a plurality of stages, each of which can represent a chamber. For example, the vessel can be a distillation-polymerization tower. The vessel can have a plurality of stages having a staging tray and a downcomer. The vessel can be a conductive material. In various aspects, the vessel can be mild steel, clad mild steel, solid stainless steel or other non-ferrous metallic vessels, or it can be fabricated from layers of different materials. The vessel can have a wall thickness of at least or about 0.5 cm, 1 cm, 2 cm, 3 cm, 4 cm, 5 cm, or at least or about 10 cm. In various examples, the vessel does not have an agitator. In various other examples, an agitator can optionally be included, such as in the inner diameter space, in the space between plates and the exterior vessel wall, or in spaces created between plates. The agitator can be optional. Such agitator can be mechanical. An agitator can be shaft driven or produced via jet eductors. In various examples, the vessel does not include sparging or bubbling. In various other examples, the vessel includes sparging or bubbling.

The various vessels, heat exchangers, processes, and systems described herein can involve using the heating elements to heat polyamide precursors, polyamide prepolymer, or a mixture containing one or more of polyamide precursors, polyamide polymer, or polyamide product.

"Polyamide" can refer to polymer having repeating units linked by amide bonds. Polyamides may arise from monomers comprising aliphatic, semi-aromatic or aromatic groups. Polyamide includes nylons, e.g., nylon-6,6 or nylon-6, and may refer to polyamides arising from a single monomer, two different monomers, or three or more different monomers. The term polyamide thus includes dimonomeric polyamides. The polyamide may be a nylon having as monomer units a dicarboxylic acid monomer unit and a diamine monomer unit. For example, if the dicarboxylic acid monomer unit is adipic acid and the diamine is hexamethylene diamine, the resulting polyamide can be nylon-6,6. Nylon-6 is a polyamide having a caprolactam monomer. The polyamide may be a copolymer which may be prepared from aqueous solutions or blends of aqueous solutions that contain more than two monomers. In various aspects, polyamides can be manufactured by polymerization of dicarboxylic acid monomers and diamine monomers. In some cases, polyamides can be produced via polymerization of aminocarboxylic acids, aminonitriles, or lactams. Suitable polyamides include, but are not limited to, those polymerized from the monomer units described herein. The term "polyamide" includes nylon-4,6, nylon-4,10, nylon-5,6, nylon-5,6/5T, nylon-5I/5T, nylon-5,10, nylon-5,12, nylon-6, nylon-6,6, nylon-12, nylon-6,10, nylon-6,12, nylon-6T/DT, nylon-6I/6T and nylon-66/6T. In various aspects, the polyamide is nylon-6,6. Polyamide prepolymer can refer to a dimeric or oligomeric polymer that is intermediate to the target polyamide polymer product.

Polyamide "precursors" can refer to a mixture containing a reagent that alone, or together with other precursors, condenses or polymerizes to form a polyamide. For example, precursors can contain a diacid, a diamine, or both. The diacid can be a diacid salt. The diamine can be a diamine salt. For example, the diacid can be oxalic acid, malonic acid, succinic acid, glutaric acid, pimelic acid, hexane-1,6-dioic acid (adipic acid), octane-1,8-dioic acid (suberic acid), azelaic acid, decane-1,10-dioic acid (sebacic acid), undecanedioic acid, dodecane-1,12-dioic acid, maleic acid, glutaconic acid, traumatic acid, muconic acid, 1,2-cyclohexanedicarboxylic acid, 1,3-cyclohexanedicarboxylic acid, 1,4-cyclohexanedicarboxylic acid, 1,2- or 1,3-phenylenediacetic acids, 1,2- or 1,3-cyclohexane diacetic acids, benzene-1,2-dicarboxylic acid (phthalic acid), benzene-1,3-dicarboxylic acid (isophthalic acid), benzene-1,4-dicarboxylic acid (terephthalic acid), 4,4'-oxybis(benzoic acid), 4,4-benzophenone dicarboxylic acid, 2,6-napthalene dicarboxylic acid, p-t-butyl isophthalic acid and 2,5-furandicarboxylic acid and mixtures thereof. The dicarboxyic acid monomer unit can be adipic acid. The diamine can be ethylene diamine, trimethylene diamine, tetramethylene diamine (putrescine), pentamethylene diamine (cadaverine), hexamethylene diamine, 2-methyl pentamethylene diamine, heptamethylene diamine, 2-methyl hexamethylene diamine, 3 methyl hexamethylene diamine, 2,2-dimethyl pentamethylene diamine, octamethylene diamine, 2,5-dimethyl hexamethylene diamine, nonamethylene diamine, 2,2,4- and 2,4,4-trimethyl hexamethylene diamines, decamethylene diamine, 5-methylnonane diamine, isophorone diamine, undecamethylene diamine, dodecamethylene diamine, 2,2,7,7-tetramethyl octamethylene diamine, bis(p-aminocyclohexyl)methane, bis(aminomethyl)norbornane, C2-C16 aliphatic diamine optionally substituted with one or more C1-C4 alkyl groups, aliphatic polyether diamines and furanic diamines such as 2,5-bis(aminomethyl)furan, xylylenediamine and mixtures thereof. The diamine can be hexamethylenediamine. The precursor can be a disalt or monosalt. The precursor can be an aqueous salt mixture. As another example, precursors can contain a lactam, for example caprolactam.

Referring to FIG. 1A-D, one aspect of a vessel 100 is illustrated using a stacked array of internally located induction heating elements 110. The vessel has a chamber internal cavity 101, which is defined by a chamber wall 102. The vessel can be suitable for use as a polyamide autoclave, such as for production of nylon-6,6. The vessel can be various sizes, for example, a meter diameter autoclave. The chamber wall 102 can be a conductive material or a multi-layer construction including one or more conductive layers. In various examples, the chamber wall 102 can optionally be surrounded by an external induction coil 103 or a hot oil or vapor jacket can be alternatively used or a combination of both. The internal cavity 101 can optionally include an agitator having an agitator shaft 104 and agitator prop 105. A shroud baffle can be included around the agitator to increase vertical flow. The vessel can have an outlet drain 106 for product removal, the upper flange of the vessel has one or more inlet 107 for adding precursor material and one or more outlet 108 for removing vapor or relieving pressure. In this example, the agitator shaft 104, agitator prop 105, outlet drain 106, and array of heating elements 110 can be described as centrally located along a vertical axis of the vessel and chamber. The stacked array of internally located induction heating elements 110 is distributed along the axis of the vessel providing radial, circumferential flow channels 111 through which reaction material can flow. A central opening in each of the vertically arranged heating elements 110 provides an axial flow channel 112, which is also working space for the agitator shaft 104 and agitator prop 105. The agitator can optionally also include mixing elements that operate in the annular space between the heating elements 110 and the vessel wall 102. The axial flow channel and radial flow channel are in fluid communication with each other. In various examples, at the periphery of the chamber, the heating elements terminate prior to the chamber wall, so as to provide an axial, circumferential flow channel 113, in fluid communication with the radial circumferential flow channels and the central axial flow channel.

The heating elements 110 are sized and shaped to be conveniently deployed in the polyamide vessel while maximizing heat transfer surface area. Each heating element 110 represents a separate induction heating element and is shaped as a frustum of cone. The frustum of cones are assembled into a stack sized and are vertically mounted to the bottom flange of the vessel. The inside diameter of the frustum is sized to allow working space for the agitator shaft 104 and prop 105. Each heating element 110 within the stack comprises two plates 114 welded or sealed together encapsulating an induction coil 115 containing electrically insulated metal tubing. Electrically insulated multi-twist cable can be used in place of the tubing. The electrically insulated metal tubing or cables of the induction coil are arranged to have some space apart from each and can be insulated. The external plates 114 are the susceptor of this internal coil design. Supply and return tubing or cables, not shown for clarity, are run down vertical pipes from each heating element through the base mount. The supply and return tubing or cables can be interconnected or supported together, or bundled through a single supple and return pipe. A water recirculation loop can be connected to the tubing and can keep the coil at a temperature of below 40°C. This can reduce the cooling load and can optionally be configured to provide a thermal break between the coil and the susceptor plates. Thin thermal insulation can also be sandwiched between the coil and the susceptor plates. The angles of the plates can allow for fluid circulation during heating and product drainage at the end of the batch cycle. FIG. 1A shows a batch reactor vessel using an example stacked array of heating elements 110, that are partially sectioned. FIG. 1B shows a cross-sectional view of an example stacked array of heating elements 110. FIG. 1C shows a cross-sectional view of an example individual heating element 110. FIG. 1D shows a top view of the example array, in which the central axial flow channel 112 is visible, which is surrounded by the heating element 110 having a substantially circular shape.

Referring to FIG. 2A-C, one aspect of a vessel 100 is illustrated using a concentric array of internally located induction heating elements 120. The vessel has a chamber internal cavity 101, which is enclosed in by a chamber wall 102. The vessel can be suitable for use as a polyamide autoclave, such as for production of nylon-6,6. The vessel can be various sizes, for example, a meter diameter autoclave. The chamber wall can be a conductive material or a multi-layer construction including one or more conductive layers, and it can be optionally surrounded by an external induction coil 103 or a hot oil or vapor jacket can be alternatively used or a combination of both types of heating can be used. The internal cavity of the chamber can optionally include an agitator having an agitator shaft 104 and agitator prop 105. A shroud baffle can be included around the agitator to increase vertical flow. The vessel can have an outlet drain 106 for product removal, the upper flange of the vessel has one or more inlet 107 for adding precursor material and one or more outlet 108 for removing vapor or relieving pressure. In this example, the agitator shaft 104, agitator prop 105, outlet drain 106, and array of heating elements 120 can be described as centrally located along a vertical axis of the vessel and chamber. The concentric array includes internally located induction heating elements 120, which are rod-shaped and distributed radially and concentrically from the axis of the vessel. The rods are mounted to circular support rings 121 at each concentric circle. Between the concentric rings, the array provides circumferential, axial flow channels 122 through which reaction material can flow. Between adjacent rods on each support ring is provided a radial flow channel 123. The axial flow channel and circumferential, axial flow channel are in fluid communication via the radial flow channels between rods. The array also provides a central axial flow channel 124, which is also working space for the agitator shaft 104 and agitator prop 105. In various examples, at the periphery of the chamber, between the chamber wall and the outermost ring of heating elements, is an axial, circumferential flow channel 125. The agitator can optionally also include mixing elements that operate in the annular flow channel 125.

The heating elements 120 are vertically oriented rod-shaped induction heating elements, which can be installed through a top flange or bottom flange of the vessel.

Each heating element 120 within the array represents a separate induction heating element. Each of these elements comprises a pipe inside which is contained a coil of metal tubing, optionally including an insulating layer and a magnetic flux concentrator. The coil can optionally be made from insulated multi-twist cable. The coils can be formed via a helical wind within each tube. The induction coils can be either conductive tubing or cables. The internals of the pipe can be sealed from the process fluid via welding and the use of appropriate process pipe fittings. The pipes, which represent the susceptor and provide the rod-shape of the heating unit, are connected at the top and bottom to flat metal support rings 121 that serve for fixing the array. The connection can be welded, braised, or otherwise fixed to the support. The supports are of suitable metallurgy such as stainless steel, and these support rings are vertically mounted at the top or bottom of the vessel. Supply and return lines for power and liquid cooling of the induction coil, not shown for clarity, are run through vertical pipes or tubing from each heating element through the top or bottom of the vessel. Use of a thermal break between the tubing coil and the susceptor pipes can reduce the heat load on the liquid cooling. The supply and return lines can be tied together, or bundled through a single supple and return pipe. When supply and return is conjoined it is sized to ensure adequate distribution across the multiple legs of the array. The rods are vertically positioned and allow for fluid circulation during heating and product drainage at the end of the batch cycle. FIG. 2A shows a batch reactor vessel using an example concentric array of heating elements 110. FIG. 2B shows a cross-sectional view of an example concentric array of heating elements 120. FIG. 2C shows a top view of an example concentric array of heating elements 120.

Referring to FIG. 3A-B, one aspect of a flow-through heat exchanger 200 is illustrated using an array of internally located induction heating elements 220. The heat exchanger is suitable for heating reaction precursors and reaction mixtures. The heat exchanger has a chamber, which can be considered a chamber having internal cavity 201, which is enclosed in by a chamber wall 202. The heat exchanger is suitable for polyamidation processes, such as for heating precursor materials during diacid dissolution steps and during salt preparation, including when placed in a recirculation loops around a vessel. The heat exchanger can be various diameters and lengths. The chamber wall can be a conductive material and can be optionally surrounded by an external induction coil 203 and in some configurations of the heat exchanger the external coil can be used without any internal coils. In various examples, the induction coils of the heating elements can be formed from helical windings of electrically conductive tubes or cables within the heating element tubes, or the induction coil can be external to the heat exchanger shell, or both. The internal cavity of the chamber can include baffles 204, which can take the form of an induction heated fins, baffles, plates or tubes or any such combination to serve as both heating surface and agitate the flow channel. The heat exchanger can have end caps 205, which can serve to mount heating elements and for can provide space for electrical and cooling fluid supply connections and lines. The vessel can have an inlet 206 and an outlet 207. In various examples, the inlet receives addition of polyamide precursors such as diacids or diamines, or reaction media from a polyamide process.

The heating elements 220 are rod-shaped and axially oriented with the axis of predominant flow in the heat exchanger. However, as evident from the illustration, the array does not need to have an axis of symmetry or be located centrally around the axis of flow of the heat exchanger. Heating elements are spaced to provide flow channels between the heating elements, permitting radial, axial, and circumferential flow. The baffles 204 can increase turbulence and radial flow through the unit. The baffles 204 can be heated or non-heated. In various aspects, the baffles can be oriented radially from the axis of flow, for example perpendicularly to the axis of flow or pitched at a radial but non-perpendicular angle from the axis of flow. The rods are mounted to end caps 205. The heat exchanger can be part of a recirculator.

Induction coils are deployed within heating elements 220 and connections to the coils are made outside of the process fluid in end caps 205 such that the internals of the rods can be kept sealed from the process fluid. Supply and return lines for power and liquid cooling of the induction coil can transit through one or both end caps 205. The coil can optionally be made from insulated multi-twist cable. The heating elements are positioned and allow for fluid circulation during heating and product drainage and flow. FIG. 3A shows a cross-sectional view of the heat-exchanger 200. FIG. 3B shows an end view of the heat exchanger illustrating the arrangement of induction heating elements.

Referring to FIG. 4A-B, one aspect of a flow-through heat exchanger 200 is illustrated using an array of concentrically arranged induction heating elements 230. The heat exchanger is suitable for heating reaction precursors and reaction mixtures. The heat exchanger has a chamber, which can be considered a chamber having internal cavity 201, which is enclosed in by a chamber wall 202. The heat exchanger is suitable for polyamidation processes, such as for heating precursor materials during diacid dissolution steps and during salt preparation, including when placed in a recirculation loops around a stirred vessel. For example, the heat exchanger can provide high flow and can be suitable for use as the heat exchanger of a thermosyphon reboiler. The heat exchanger can be various diameters and lengths. The chamber wall can be a conductive material and can be optionally surrounded by an external induction coil. For example, the outer most cylinder can be the chamber wall 202 or it can be a heating element 230. The heating elements 230 provide a plurality of concentric flow channels 231. The heat exchanger can have a plurality inlets 206, or can have a single inlet 206 that is subsequently divided into a plurality of flow channels. The heat exchanger can have a plurality of outlets 207, or can have a single outlet 207 that is the summed from the plurality of flow channels. In various examples, the inlet receives addition of polyamide precursors such as diacids or diamines, or reaction media from a polyamide process. The heat exchanger can be part of a recirculator. For example, US 3,900,450, describes a thermosiphon reboiler in which vertical flow and high energy flux is important. While variations of the preceding aspects can be suitable for use as the heat exchanger or recirculators of a reboiler, including a thermosiphon reboiler, the example illustrated in FIG. 4 is particularly suitable for reboilers and vertically-oriented heat exchangers.

The heating elements 230 are concentric cylinders that are axially oriented with the axis of predominant flow in the heat exchanger. The flow channels permit flow along the axis and circumferential flow around the axis. Each heating element has an inner wall and an outer wall sealed together encapsulating an induction coil. The coils can be fabricated from insulated multi-twist cables or electrically insulated conductive tubing connected to a cooling liquid circuit. Providing a thermal break between the coil and the susceptor can reduce the heat load on the cooling circuit. The walls of the cylindrical heating elements serve as susceptors. The inner most wall of each pair is typically the primary heating surface as it is subjected to higher magnetic flux. A channel is allowed for the vertical fluid flow between each heating element 230. For a 1-metre diameter reboiler, 27 cylindrical heating elements 230 can be concentrically arrayed. The supply connections can be made to one end or both of each cylindrical heating element 230. The internal induction coil can be arranged by spiraling within each respective heating element 230. The return connections can be made to the opposite end of the array. Connections to the coils can be made outside of the path of fluid flow, for example, by use of end caps onto which the heating elements 230 are mounted. The heating elements are positioned axially and allow for high vertical flow and high energy flux. FIG. 4A shows a cross-sectional view of the heat-exchanger 200. FIG. 4B shows an end view of the heat exchanger illustrating the concentric arrangement of heating elements and flow channels.

Referring to FIG. 5A-B, one aspect of an induction heated chamber 300 is illustrated using an array of induction heating elements 310. The chamber depicted represents one of several stages in a multistage vessel, such as a multistage continuous distillation-polymerization tower. Examples of multistage polyamidation reaction vessels are described in U.S. Patent Nos. 3,900,450 and 5,674,974. Multistage vessels can demand excellent temperature control at each staging and demand maintenance of surface temperatures of the heater within well controlled limits to avoid degradation of product. Although in a vertical distillation-polymerization tower rising vapor in the vessel creates a dominant vertical flow, it can be advantageous that there is mass transfer and radial mixing at each stage in the vertical sequence. The various examples described herein provide channeling in the reaction stages, which permits vertical flow through staging and high energy flux overall, but without suffering from problems associated with uneven heating, product loss, or poor mixing at the stage level.

The chamber 300 includes an internal cavity 301, which can correspond to a staging chamber, and is at least partially enclosed by a chamber wall 302. The vessel can be suitable for use as a polyamide reactor vessel, such as for production of nylon-6,6. The chamber can be various sizes. The chamber includes a stage plate 303, which can be a distillation tray, and a downcomer 304. The stage plate can be perforated with a plurality of openings 305 to permit the passage of vapor phase reaction materials from a lower stage to a higher stage. The downcomer can permit the flow of liquid reaction material from an upper stage to a lower stage. FIG. 5 depicts a stage liquid level 306 to illustrate how liquid reaction material accumulates in the staging chamber. The chamber 300 further includes induction heating elements 310. In various examples, the heating elements can be plate-type, rod-type, or cylindrical. FIG. 5 depicts heating elements that are shaped from tubing bent into a butterfly arrangement, and thus has aspects of both cylindrical and plate-type heating elements. For example, the butterfly heating element can correspond to a portion of a cylindrical or donut shape, in which supply and return portions of the tubing are pinched off where attached to mounting supports. The coil can be constructed of insulated multi-twist cable or of electrically insulated conductive tubing connected to a cooling liquid circuit. Providing a thermal break between the coil and the susceptor reduces the heating load on the cooling circuit. The chamber wall can be a conductive material and can be optionally surrounded, at one or more stage, by an external induction coil 307 or optionally or alternatively include the use of another type of external heating system.

In various examples, the induction heating elements 310 are located below the downcomer in the area of liquid accumulation for the stage. For example, the heating elements 310 can rests directly below the downcomer at the location of liquid downflow so as to contact with the downflow, or the heating elements 310 can rest below the downcomer but encircling the area of liquid downflow.

The heating elements can be arranged in a vertical stack. In this example, the downcomer can be described as centrally located along a vertical axis of the chamber. The stacked array of internally located induction heating elements 310 is distributed along the axis of the chamber providing radial, circumferential flow channels 311 between vertically stacks. A central opening in each of the vertically arranged as clearly illustrated in FIG. 5A. Heating elements 310 provide an axial flow channel 312, which also provides space downcomer. The axial flow channels and radial flow channels are in fluid communication. In various examples, at the periphery of the chamber, the heating elements terminate prior to the chamber wall, so as to provide an axial, circumferential flow channel 313, in fluid communication with the radial circumferential flow channels and the central axial flow channel.

The heating elements can also be concentrically arranged as more clearly illustrated in FIG. 5B. Between the concentric rings, the array provides additional circumferential, axial flow channels 314 through which reaction material can flow between heating elements. Between neighboring butterfly heating elements within each ring is provided a partial radial flow channel 315 that permits fluid communication between the concentric circumferential flow channels 314 and other flow channels. The concentric arrangement array also permits the central axial flow channel 312.

Referring to FIG. 6A-B, one aspect of an induction heated vessel 600 having a heated precursor mixing vessel 100 and a multistage continuous reactor vessel 601, which is a distillation-polymerization tower. The heated precursor mixing vessel 100 is illustrated using a stacked array of internally located induction heating elements 110. The vessel can be used to achieve dissolution of polyamide precursor salts, such as adipic acid salt and hexamethylenediamine salt. The vessel has a chamber internal cavity 101, which is enclosed in by a chamber wall 102. The chamber wall can be a conductive material. In various examples, the chamber wall can optionally be surrounded by an external induction coil 103. The internal cavity of the chamber can include an agitator having an agitator shaft 104 and agitator prop 105. The vessel can have an outlet drain 106 for removing and conveying dissolved precursor to the multistage continuous reactor vessel 601 the upper flange of the vessel has one or more inlet 107 for adding precursor material and one or more outlet 108 for removing vapor or relieving pressure. The stacked array of internally located induction heating elements 110 is distributed along the axis of the heated precursor mixing vessel providing radial, circumferential flow channels 111 through which reaction material can flow. A central opening in each of the vertically arranged heating elements 110 provides an axial flow channel 112, which is also working space for the agitator shaft 104 and agitator prop 105. The axial flow channel and radial flow channel are in fluid communication. In various examples, at the periphery of the chamber, the heating elements terminate prior to the chamber wall, so as to provide an axial, circumferential flow channel 113, in fluid communication with the radial circumferential flow channels and the central axial flow channel. The inside diameter of the frustum 110 can define an axial flow channel 112 sized to allow working space for the agitator shaft 104 and prop 105.

The multistage continuous reactor vessel 601 includes an internal cavity 611, which can correspond to a staging chamber, and is at least partially enclosed by a chamber wall 612. The vessel includes stage plates 613 and downcomers 614. The vessel further includes induction heating elements 620 at the various staging. In various examples, the heating elements can be plate-type, rod-type, or cylindrical. FIG. 6 depicts heating elements that are shaped from tubing bent into a butterfly arrangement, and thus has aspects of both cylindrical and plate-type heating elements. The multistage continuous reactor vessel 601 includes an inlet 618 for dissolved precursor salts. Additional inlets 619 can be included, for example, for precursor material in vapor form. The vessel also contains an outlet 617 for removal of gas byproducts, and an outlet 616 for removal of polyamide polymer product or removal of prepolymer product for further processing. The vessel can also contain an agitator 630, for which the lower heating elements providing working space.

Referring to FIG. 7, one aspect of an induction heated thermosiphon reboiler 700 having a distillation-polymerization tower and induction heated, high vertical flow-through heat exchanger. The vessel can have an inner cavity 711 at least partially enclosed by a chamber wall 712. The vessel can include a plurality of distillation stages, which can have a distillation tray 713 and a downcomer 714. The vessel has an outlet 717 for removal of gas byproducts, and an outlet 716 for removal of polyamide polymer product, or removal of prepolymer product for further processing. The vessel also has an inlet 718 through which precursor and reaction material is provided. Outlet 719 is provided for recirculation of liquid reaction media, which is removed from inner cavity 711 and transferred via thermosiphon to a high vertical flow-through heat exchanger 200. The flow-through heat exchanger 200 can an internal cavity 201, which contains an array of concentrically arranged induction heating elements 230 enclosed by a chamber wall 202. The chamber wall can be a conductive material and can be optionally surrounded by an external induction coil. The heating elements 230 provide a plurality of concentric, axially aligned flow channels 231. The heat exchanger can have an inlet 206 that is subsequently divided into a plurality of flow channels, then combined into an outlet 207 that is transmitted through a transfer line and inlet 718 to inner cavity 711 of the distillation-polymerization tower. The heat exchanger can generate a thermosiphon such that the pump between the tower inner cavity 711 and the heat exchanger 200 can be omitted.

The heating elements can be arranged in various manners. For example, internal coils fitted into tubes provide many options for arranging heaters across the fluid volume, such as in a butterfly arrangement. Yet, in other aspects, a staging chamber can suitably utilize plate-type and rod-type heating elements. For example, it is possible to utilize a relatively large horizontal pancake type heating element having a coil sealed inside two plates, and to position the plate heater directly below the downcomer. This arrangement is found to promote liquid distribution and not hinder stage function. Smaller fins or plates can be fabricated based on pancake designs to enable fitting more than one heating element or array of heating elements into a stage without disrupting mixing. Butterfly-type heating elements can provide the ability to gain more surface area with the fewest number of connections. For example, the arrangement depicted in FIG. 5 can share support, mounting, and connective cabling between adjacent heating elements.

Connections to the coil can be made either directly through the external vessel wall from below or above the working liquid level, or they can be made through channels fabricated into the mounting of the heating elements, either from below or above the liquid. For example, the mounting and coil connections can run along the downcomer, or along the stage tray. Many other variations are possible without departing from the inventive use.

In each of these examples, variations in spacing and deviations from orientation, e.g., deviations from verticality, can be used without deviating from the inventive use. For example, in various aspects the vessels and heat exchangers do not need to include a single concentric array but can include any number of separate heating elements and the heating elements do not need to be concentric or even centered within the vessel. Inductively heated fins or plates can optionally be deployed. The vessels and heat exchangers can be fabricated in a rectangular cross-section. Vertical walls can be dimpled or textured to promote turbulence. Many such variations can be utilized without deviating from the spirit and scope of the invention as defined in the claims.

Throughout this document, values expressed in a range format should be interpreted in a flexible manner to include not only the numerical values explicitly recited as the limits of the range, but also to include all the individual numerical values or sub-ranges encompassed within that range as if each numerical value and sub-range is explicitly recited. For example, a range of "about 0.1% to about 5%" or "about 0.1% to 5%" should be interpreted to include not just about 0.1% to about 5%, but also the individual values (e.g., 1%, 2%, 3%, and 4%) and the sub-ranges (e.g., 0.1% to 0.5%, 1.1% to 2.2%, 3.3% to 4.4%) within the indicated range. The statement "about X to Y" has the same meaning as "about X to about Y," unless indicated otherwise. Likewise, the statement "about X, Y, or about Z" has the same meaning as "about X, about Y, or about Z," unless indicated otherwise.

In this document, the terms "a," "an," or "the" are used to include one or more than one unless the context clearly dictates otherwise. The term "or" is used to refer to a nonexclusive "or" unless otherwise indicated. The statement "at least one of A and B" or "at least one of A or B" has the same meaning as "A, B, or A and B." In addition, it is to be understood that the phraseology or terminology employed herein, and not otherwise defined, is for the purpose of description only. Any use of section headings is intended to aid reading of the document and is not to be interpreted as limiting; information that is relevant to a section heading may occur within or outside of that particular section.

The term "system" can be used to describe an apparatus. The term "apparatus" can refer to a single piece of equipment or an interconnected assembly of individual pieces of equipment.

The term "about" as used herein can allow for a degree of variability in a value or range, for example, within 10%, within 5%, or within 1% of a stated value or of a stated limit of a range, and includes the exact stated value or range.

The term "substantially" as used herein refers to a majority of, or mostly, as in at least about 50%, 60%, 70%, 80%, 90%, 95%, 96%, 97%, 98%, 99%, 99.5%, 99.9%, 99.99%, or at least about 99.999% or more, or 100%. The term "substantially free of" as used herein can mean having none or having a trivial amount of, such that the amount of material present does not affect the material properties of the composition including the material, such that the composition is about 0 wt% to about 5 wt% of the material, or about 0 wt% to about 1 wt%, or about 5 wt% or less, or less than, equal to, or greater than about 4.5 wt%, 4, 3.5, 3, 2.5, 2, 1.5, 1, 0.9, 0.8, 0.7, 0.6, 0.5, 0.4, 0.3, 0.2, 0.1, 0.01, or about 0.001 wt% or less. The term "substantially free of" can mean having a trivial amount of, such that a composition is about 0 wt% to about 5 wt% of the material, or about 0 wt% to about 1 wt%, or about 5 wt% or less, or less than, equal to, or greater than about 4.5 wt%, 4, 3.5, 3, 2.5, 2, 1.5, 1, 0.9, 0.8, 0.7, 0.6, 0.5, 0.4, 0.3, 0.2, 0.1, 0.01, or about 0.001 wt% or less, or about 0 wt%.

### Examples

### Comparative Example 1

A nylon autoclave reactor vessel is equipped with an external heating fluid jacket, an internal heating fluid coil, and an agitator configured to function within the internal coil. Heated Dowtherm A heat transfer fluid from Dow Chemical (Midland, MI) is distributed through the external jacket around the vessel and through the internal coil. Total heat transfer area is 11.84 m². The ratio of heat transfer area to liquid volume is 12.38 m^{2/}m³. At an input heat transfer fluid temperature of 325°C it is found to require 8.1 minutes to reach 275°C.

In subsequent batches that follow this initial nylon batch production, residual polymer left behind from the previous batch functions as a thermal insulator and limits heat transfer in the early batch cycles. This resulting thermal insulation resistance to Dowtherm A heating further increases the batch cycle time in early stages of the polymerization process.

### Comparative Example 2

A nylon autoclave reactor vessel is equipped with an external induction heating coil, and an agitator. The agitator is used at the same rotational speed as Comparative Example 1. Total heat transfer area of this arrangement is 6.16 m². The ratio of heat transfer area to liquid volume is 6.44 m^{2/}m³. The induction heater allows for increasing the surface temperature by an extra 25°C across the entire area. Despite the higher surface temperature, it is found to require 29.0 minutes to reach the 275°C.

### Comparative Example 3

In the nylon autoclave reactor vessel as described in Comparative Example 1, the vessel wall is about 23 mm carbon steel with an internal 3-4 mm SS316 cladding. The Dowtherm A heating raises the outside thick wall temperature to about 325-330°C. There exists a strong temperature gradient across the vessel wall while trying to keep the internal mass at the desired temperature of up to about 275°C. Upon completion of the polymerization step the heat is turned off. However, the Dowtherm A heating system has thermal inertia even after the heat has been turned off. This phenomenon continues to heat the vessel contents to about 10°C higher than the desired setpoint. The vessel system is equipped with a pressure relief device and care must be taken not to lead this over-heating to a pressure event. In addition, such sluggish thermal effects caused by Dowtherm A system leads to increased gelation effects in the polymer production.

### Comparative Example 4

In the nylon autoclave reactor vessel described in Comparative Example 3, batch production of nylon 66/6T requires about 330-335 °C inside surface temperature (temperature of the metal facing the reactive process fluid) to be able to obtain a good quality molten polymer lace upon completion. The Dowtherm A heating system becomes inefficient due to its upper operational temperature limit. Though Dowtherm A is standardly used heat transfer fluids in industry because of its stability at high temperatures, operating such systems close to their upper temperature limits suffers from high rates of decomposition. The batch takes a long cycle time due to this restriction on the Dowtherm A temperature as well as very small temperature driving force available for heating.

### Example 1

A nylon autoclave reactor vessel is equipped with an external induction heating coil, an agitator, and a high surface area internal heater utilizing an induction heating coil. The agitator is used at the same rotational speed as the previous examples. Total heat transfer area is 25.3 m². The ratio of heat transfer area to liquid volume is 26.4 m^{2/}m³. Deploying the same higher surface temperature as in Comparative Example 2, it is found to reach the endpoint temperature at 2.6 minutes.

In subsequent batches that follow this initial nylon batch, residual polymer from the previous batch functions as a thermal insulator. However, unlike in Comparative Example 1, induction heating remains more of less unaffected by this added thermal resistance to heating.

### Example 2

In the described nylon autoclave reactor vessel of Example 1, induction heating is now applied to heat the vessel contents. There is no observed thermal inertia followed by over-heating of the vessel contents when induction heating is turned off. It is also observed that gelation is reduced when Dowtherm A heating system is replaced with induction heating.

### Example 3

For the nylon 66/6T batch production described in Comparative Example 4, induction heating replaces the Dowtherm A heating system. Heating becomes efficient due to higher temperature driving force than that present in the Dowtherm A system. The overall batch cycle time improves. Good quality molten polymer lace is produced at the end of production.

### Example 4

The nylon autoclave reactor vessel, as described in Example 1 above, is used except the internal agitation is replaced with an external circulation loop. The circulated fluid flow is introduced back in the vessel via a nozzle. The external circulation loop can optionally be integrated with a heat exchanging device for additional heating and/or to makeup for heat loss to the ambient. For the heat transfer area of 25.3 m² as in Example 1, similar performance for the heat-up cycle times is achieved.

## Claims

1. An apparatus for preparing a polyamide polymer, comprising:
a vessel (100) comprising a chamber containing two or more heating elements (120), the heating elements each comprising a susceptor (114) and an induction coil (115) optionally connected to a power source;
an inlet (107) for adding liquid polyamide precursors to the vessel;
an outlet (108) for removing water vapor from the vessel; and
an outlet (106) for removing the polyamide polymer from the vessel;
wherein
the heating elements are positioned in an array that provides one or more channels between the two or more heating elements through which liquid can flow, and
the one or more channels comprise at least one channel (111) that is circumferential about an axis of the chamber, and at least one channel (112) that is parallel to the axis of the chamber; and the axis of the chamber is a vertical axis, or an axis corresponding to a predominant direction of liquid flow through the vessel.

2. The apparatus of claim 1, wherein the array comprises a stack of two or more heating elements axially distributed and comprises circumferential, radial channels between adjacent heating elements in the stack.

3. The apparatus of claim 1, wherein the array comprises a concentric arrangement of the heating elements radially distributed into concentric rings and comprises one or more circumferential and axial channels between adjacent concentric rings.

4. The apparatus of claim 1, wherein the array comprises heating elements that are circumferentially distributed about the axis of the chamber so as to provide one or more radial channels between adjacent heating elements.

5. The apparatus of any one of claims 1-4, wherein the induction coil comprises an insulated cable, a conduit for cooling fluid, or both.

6. The apparatus of any one of claims 1-4, wherein the induction coil comprises a conductive tube that acts as a conduit for cooling fluid.

7. The apparatus of any one of claims 1-4, wherein the induction coil comprises helical windings of electrically conductive tubes or cables.

8. The apparatus of any one of claims 1-4, wherein the heating elements are in the shape of rods, plates, helical shapes, conical frustums having an open inside diameter, open cylinders, or tubes in a butterfly arrangement.

9. The apparatus of any one of claims 1-4, wherein the heating elements are located in a heat exchanger of a recirculator, a staging chamber of a multistage continuous reactor vessel, or an autoclave chamber of a batch reactor vessel.

10. The apparatus of any one of claims 1-4, wherein the polyamide polymer is nylon-6,6.

## Patentansprüche

1. Einrichtung zur Herstellung eines Polyamidpolymers, umfassend:
ein Gefäß (100), das eine Kammer umfasst, die zwei oder mehr Heizelemente (120) enthält, wobei die Heizelemente jeweils einen Suszeptor (114) und eine Induktionsspule (115) umfassen, die optional mit einer Stromquelle verbunden ist;
einen Einlass (107) zum Hinzufügen flüssiger Polyamid-Vorläufer zu dem Gefäß;
einen Auslass (108) zum Entfernen von Wasserdampf aus dem Gefäß; und
einen Auslass (106) zum Entfernen des Polyamidpolymers aus dem Gefäß;
wobei
die Heizelemente in einer Anordnung angeordnet sind, die einen oder mehrere Kanäle zwischen den beiden oder mehren Heizelementen bereitstellt, durch die Flüssigkeit fließen kann, und
der eine oder die mehreren Kanäle mindestens einen Kanal (111), der um eine Achse der Kammer herum verläuft, und mindestens einen Kanal (112) umfassen, der parallel zu der Achse der Kammer verläuft; und die Achse der Kammer eine vertikale Achse oder eine Achse ist, die einer vorherrschenden Richtung des Flüssigkeitsflusses durch das Gefäß entspricht.

2. Einrichtung nach Anspruch 1, wobei die Anordnung einen Stapel aus zwei oder mehr axial verteilten Heizelementen umfasst und umlaufende, radiale Kanäle zwischen benachbarten Heizelementen in dem Stapel umfasst.

3. Einrichtung nach Anspruch 1, wobei die Anordnung eine konzentrische Anordnung der Heizelemente umfasst, die radial in konzentrischen Ringen verteilt sind, und einen oder mehrere umlaufende und axiale Kanäle zwischen benachbarten konzentrischen Ringen umfasst.

4. Einrichtung nach Anspruch 1, wobei die Anordnung Heizelemente umfasst, die umlaufend um die Achse der Kammer verteilt sind, um einen oder mehrere radiale Kanäle zwischen benachbarten Heizelementen bereitzustellen.

5. Einrichtung nach einem der Ansprüche 1-4, wobei die Induktionsspule ein isoliertes Kabel, eine Leitung für Kühlflüssigkeit oder beides umfasst.

6. Einrichtung nach einem der Ansprüche 1-4, wobei die Induktionsspule ein leitfähiges Rohr umfasst, das als Leitung für Kühlflüssigkeit dient.

7. Einrichtung nach einem der Ansprüche 1-4, wobei die Induktionsspule spiralförmige Wicklungen aus elektrisch leitenden Rohren oder Kabeln umfasst.

8. Einrichtung nach einem der Ansprüche 1-4, wobei die Heizelemente in Form von Stäben, Platten, Spiralformen, Kegelstümpfen, die einen offenen Innendurchmesser aufweisen, offenen Zylindern oder Rohren in Schmetterlingsanordnung sind.

9. Einrichtung nach einem der Ansprüche 1-4, wobei sich die Heizelemente in einem Wärmetauscher eines Zirkulators, einer Stufenkammer eines mehrstufigen kontinuierlichen Reaktorbehälters oder einer Autoklav-Kammer eines Chargenreaktorbehälters befinden.

10. Einrichtung nach einem der Ansprüche 1-4, wobei das Polyamidpolymer Nylon-6,6 ist.

## Revendications

1. Appareil pour préparer un polymère polyamide, comprenant :
un récipient (100) comprenant une chambre contenant deux, ou plus, éléments chauffants (120), les éléments chauffants comprenant chacun un suscepteur (114) et une bobine d'induction (115) facultativement raccordée à une source d'alimentation ;
une entrée (107) pour ajouter des précurseurs de polyamide liquides au récipient ;
une sortie (108) pour retirer la vapeur d'eau du récipient ; et
une sortie (106) pour retirer le polymère polyamide du récipient ;
dans lequel
les éléments chauffants sont positionnés dans un réseau qui fournit un ou plusieurs canaux entre les deux, ou plus, éléments chauffants à travers lesquels un liquide peut s'écouler, et
les un ou plusieurs canaux comprennent au moins un canal (111) qui est circonférentiel autour d'un axe de la chambre, et au moins un canal (112) qui est parallèle à l'axe de la chambre ; et l'axe de la chambre est un axe vertical, ou un axe correspondant à une direction prédominante d'écoulement de liquide à travers le récipient.

2. Appareil selon la revendication 1, dans lequel le réseau comprend un empilement de deux, ou plus, éléments chauffants répartis axialement et comprend des canaux radiaux circonférentiels entre des éléments chauffants adjacents dans l'empilement.

3. Appareil selon la revendication 1, dans lequel le réseau comprend un agencement concentrique des éléments chauffants répartis radialement en anneaux concentriques et comprend un ou plusieurs canaux circonférentiels et axiaux entre des anneaux concentriques adjacents.

4. Appareil selon la revendication 1, dans lequel le réseau comprend des éléments chauffants qui sont répartis de manière circonférentielle autour de l'axe de la chambre de manière à fournir un ou plusieurs canaux radiaux entre des éléments chauffants adjacents.

5. Appareil selon l'une quelconque des revendications 1-4, dans lequel la bobine d'induction comprend un câble isolé, un conduit de fluide de refroidissement, ou les deux.

6. Appareil selon l'une quelconque des revendications 1-4, dans lequel la bobine d'induction comprend un tube conducteur qui agit comme un conduit de fluide de refroidissement.

7. Appareil selon l'une quelconque des revendications 1-4, dans lequel la bobine d'induction comprend des enroulements hélicoïdaux de tubes ou câbles électroconducteurs.

8. Appareil selon l'une quelconque des revendications 1-4, dans lequel les éléments chauffants sont sous la forme de tiges, de plaques, de formes hélicoïdales, de troncs coniques présentant un diamètre intérieur ouvert, de cylindres ouverts ou de tubes dans un agencement en papillon.

9. Appareil selon l'une quelconque des revendications 1-4, dans lequel les éléments chauffants sont situés dans un échangeur de chaleur d'un recirculateur, une chambre intermédiaire d'une cuve de réacteur continu à plusieurs étages, ou une chambre d'autoclave d'une cuve de réacteur discontinu.

10. Appareil selon l'une quelconque des revendications 1-4, dans lequel le polymère polyamide est le nylon-6,6.
